# EUROPÄISCHE PATENTANMELDUNG

(11) **EP 4 353 564 A1**
(43) Veröffentlichungstag der Anmeldung: **17.04.2024**
(21) Anmeldenummer: 23202776.3
(22) Anmeldetag: 10.10.2023
(51) Int. Cl.: B61L 23/00

(54) **SEILBAHN UND VERFAHREN ZUM BETREIBEN EINER SEILBAHN**

(30) Priorität: 11.10.2022 AT 507852022
(71) Anmelder: Doppelmayr Management AG, 6343 Rotkreuz (CH)
(72) Erfinder: Hoeck, Jari, 6971 Hard (AT); Dür, Gerd, 6858 Bildstein (AT)
(74) Vertreter: Patentanwälte Pinter & Weiss OG

(57) **Zusammenfassung**

Um eine Seilbahn (1) bereitzustellen, die einen möglichst autonomen Betrieb mit möglichst hoher Sicherheit für Personen ermöglicht, ist vorgesehen, dass in zumindest einer Seilbahnstation (2a) eine Erfassungseinrichtung (6) zur Erfassung einer Messgröße (M) eines Luftschalls (7) vorgesehen ist, dass eine Klassifizierungseinheit (8) vorgesehen ist, die dazu ausgebildet ist, aus der Messgröße (M) oder einer daraus abgeleiteten Größe zumindest ein definiertes sicherheitsrelevantes Schallereignis zu identifizieren und dass die Steuerungseinheit (5) dazu ausgebildet ist, die Seilbahn (1) bei Identifizierung eines definierten sicherheitsrelevanten Schallereignisses in einem festgelegten Sicherheitsbetriebsmodus zu betreiben.

## Beschreibung

Die Erfindung betrifft eine Seilbahn mit einer Anzahl von Seilbahnstationen und mit einer Anzahl von Seilbahnfahrzeugen, die mittels eines Förderseils zwischen der Anzahl von Seilbahnstationen bewegbar sind, wobei eine Steuerungseinheit zur Steuerung der Seilbahn vorgesehen ist. Weiters betrifft die Erfindung ein Verfahren zum Betreiben einer Seilbahn mit einer Anzahl von Seilbahnstationen und mit einer Anzahl von Seilbahnfahrzeugen, die mittels eines Förderseils zwischen der Anzahl von Seilbahnstationen bewegt werden, wobei die Seilbahn mittels einer Steuerungseinheit gesteuert wird.

Seilbahnen werden in bekannter Weise meist in Wintersportgebieten verwendet, um Personen, insbesondere Skifahrer, zwischen zwei Seilbahnstationen zu befördern, beispielsweise von einer Talstation zu einer Bergstation. Daneben werden Seilbahnen vermehrt im urbanen Gebiet als öffentliches Verkehrsmittel verwendet. Man unterscheidet grundsätzlich zwischen Umlaufbahnen und Pendelbahnen. Bei Umlaufbahnen werden in der Regel eine Vielzahl von Seilbahnfahrzeugen hängend mit einem Förderseil in einer umlaufenden Bewegung entlang einer geschlossenen Bahn zwischen zwei oder mehreren Seilbahnstationen bewegt. Bei Einseil-Umlaufbahnen dient das Förderseil zugleich als Tragseil und als Zugseil. Mehrseil-Umlaufbahnen weisen ein oder mehrere Tragseile auf, welche eine Fahrbahn für die Seilbahnfahrzeuge ausbilden und an den Seilbahnfahrzeugen ist jeweils ein Laufwerk mit Rollen vorgesehen, mit welchen die Seilbahnfahrzeuge entlang der Fahrbahn abrollen. Das Förderseil dient hierbei als Zugseil, um die Seilbahnfahrzeuge anzutreiben.

Die Seilbahnfahrzeuge können als Sesselfahrzeuge ausgebildet sein, die jeweils einen Sessel zur Aufnahme einer Anzahl von Personen aufweisen oder die Seilbahnfahrzeuge können als Kabinenfahrzeuge ausgebildet sein, die jeweils eine Kabine zur Aufnahme einer Anzahl von Personen oder Objekten aufweisen. Die Beförderungskapazität der Kabinen ist dabei in der Regel größer, als die Beförderungskapazität der Sessel. Wenn ausschließlich Sesselfahrzeuge vorgesehen sind, dann spricht man auch von einer Sesselbahn, wenn ausschließlich Kabinenfahrzeuge vorgesehen sind, dann spricht man auch von einer Kabinenbahn. Neben reinen Sesselbahnen und Kabinenbahnen gibt es auch noch sogenannte Kombi-Bahnen, die eine Kombination aus Kabinenbahn und Sesselbahn bilden. Hierbei wird zusätzlich zu der Anzahl an Sesselfahrzeugen eine Anzahl von Kabinenfahrzeugen verwendet. Die unterschiedlichen Seilbahnfahrzeuge einer Kombi-Bahn werden in einer bestimmten Reihenfolge mit demselben Förderseil bewegt, beispielsweise jeweils drei Sessel und jeweils eine Kabine.

Bei reinen Sesselbahnen sind je Seilbahnstation in der Regel lediglich ein Sessel-Einstiegsbereich und ein Sessel-Ausstiegsbereich vorgesehen. Je nachdem, wo sich die Seilbahnstation befindet, wird jedoch meist hauptsächlich entweder der Sessel-Einstiegsbereich verwendet (z.B. Talstation) oder der Sessel-Ausstiegsbereich (z.B. Bergstation). Bei Kombi-Bahnen hingegen weisen die Seilbahnstationen jeweils einen zusätzlichen Kabinen-Einstiegsbereich, Kabinen-Ausstiegsbereich oder kombinierten Kabinen-Einstiegs-/Ausstiegsbereich für den Einstieg in die Kabinen und/oder für den Ausstieg aus den Kabinen auf.

Im Gegensatz zu Umlaufbahnen werden die Seilbahnfahrzeuge bei Pendelbahnen in einer pendelnden Bewegung zwischen zwei Seilbahnstationen hin- und her bewegt. Die Seilbahnfahrzeuge von Pendelbahnen sind im Wesentlichen ausschließlich als Kabinenfahrzeuge ausgeführt und weisen üblicherweise eine deutlich größere Beförderungskapazität auf, als die Seilbahnfahrzeuge von Umlaufbahnen. Pendelbahnen weisen meist ein oder mehrere Tragseile auf, welche eine Fahrbahn für die Seilbahnfahrzeuge ausbilden und an den Seilbahnfahrzeugen ist jeweils ein Laufwerk mit Rollen vorgesehen, mit welchen die Seilbahnfahrzeuge entlang der Fahrbahn abrollen. Das Förderseil dient hierbei als Zugseil, um die Seilbahnfahrzeuge anzutreiben.

Ähnlich wie es bei U-Bahnen bereits einen fahrerlosen Betrieb gibt, gibt es in letzter Zeit zunehmend auch im Bereich der Seilbahnen das Bestreben, einen höheren Grad an Automatisierung zu erreichen, ohne die Sicherheit der Passagiere zu gefährden. Bisher war dies aufgrund der verfügbaren Sensorik und Steuerungstechnik nicht ohne weiteres möglich. Speziell im Wintersportbereich besteht wegen der oftmals unhandlichen Wintersportausrüstung, teils großem Gedränge oder Erschöpfung ein größeres Sicherheitsrisiko für die Passagiere, sodass ein Betrieb ohne Bedienpersonal, das im Notfall einschreiten kann, bisher nicht ohne weiteres möglich war.

Bisher wurden der Einstiegsbereich und der Ausstiegsbereich von Seilbahnen in der Regel durch das anwesende Seilbahnpersonal optisch (durch Sehen) und akustisch (durch Hören) überwacht. Wenn z.B. optisch erkannt wurde, dass eine Person gestürzt ist oder dies akustisch erkannt wurde (z.B. aufgrund von lauten Schreien oder Hilferufen) wurde die Seilbahn manuell gestoppt. Das ist jedoch einerseits personalintensiv, was dem Streben nach einem autonomen Betrieb entgegensteht. Zum anderen ist die Zuverlässigkeit der menschlichen Überwachung aufgrund von mangelnder Aufmerksamkeit, Sichtbehinderung oder Umgebungsgeräuschen in der Regel begrenzt.

Es ist daher eine Aufgabe der Erfindung, eine Seilbahn und ein Verfahren zum Betreiben einer Seilbahn bereitzustellen, die einen möglichst autonomen Betrieb mit möglichst hoher Sicherheit für Personen ermöglichen.

Die Aufgabe wird erfindungsgemäß mit der eingangs genannten Seilbahn dadurch gelöst, dass in zumindest einer Seilbahnstation eine Erfassungseinrichtung zur Erfassung einer Messgröße eines Luftschalls vorgesehen ist, dass eine Klassifizierungseinheit vorgesehen ist, die dazu ausgebildet ist, aus der Messgröße oder einer daraus abgeleiteten Größe zumindest ein definiertes sicherheitsrelevantes Schallereignis zu identifizieren und dass die Steuerungseinheit dazu ausgebildet ist, die Seilbahn bei Identifizierung eines definierten sicherheitsrelevanten Schallereignisses in einem festgelegten Sicherheitsbetriebsmodus zu betreiben. Dadurch kann der Luftschall automatisch analysiert werden und die Seilbahn in einem Sicherheitsbetriebsmodus betrieben werden, wenn ein sicherheitsrelevantes Schallereignis erkannt wird.

Die Aufgabe wird weiters mit dem eingangs genannten Verfahren dadurch gelöst, dass in zumindest einer Seilbahnstation eine Messgröße eines Luftschalls erfasst wird, dass mittels einer Klassifizierungseinheit aus der Messgröße oder einer daraus abgeleiteten Größe zumindest ein definiertes sicherheitsrelevantes Schallereignis identifiziert wird und dass die Steuerungseinheit die Seilbahn bei Identifizierung des zumindest einen definierten sicherheitsrelevanten Schallereignisses in einem festgelegten Sicherheitsbetriebsmodus betreibt.

Die Erfassungseinrichtung umfasst vorzugsweise zumindest ein Mikrofon. Dadurch können zuverlässige handelsübliche Mikrofone zur Erfassung des Luftschalls verwendet werden. Weiters ist es vorteilhaft, wenn die Erfassungseinrichtung derart in der zumindest einen Seilbahnstation angeordnet ist, dass die Messgröße im Bereich eines Bahnsteigs der zumindest einen Seilbahnstation erfassbar ist. Dadurch können insbesondere die von den Passagieren der Seilbahn erzeugten Geräusche erfasst und ausgewertet werden. Es können beispielsweise auch mehrere Mikrofone vorgesehen sein, die an verschiedenen Stellen angeordnet sind, um den Luftschall an verschiedenen Stellen der Seilbahnstation zu erfassen. Auch eine Redundanz an Mikrofonen zur Erhöhung der Ausfallssicherheit ist vorteilhaft.

Als Messgröße wird vorzugsweise ein Schalldruck verwendet. Die abgeleitete Größe kann z.B. ein Schalldruckpegel sein. Um die Detektions-Performance zu verbessern, könnten z.B. auch verschiedene Größen parallel ausgewertet werden.

Die Klassifizierungseinheit ist vorzugsweise dazu ausgebildet, aus der erfassten Messgröße oder der daraus abgeleiteten Größe ein Spektrogramm zu erzeugen und das zumindest eine definierte sicherheitsrelevante Schallereignis aus dem Spektrogramm zu ermitteln. Diese Vorgangsweise hat sich als vorteilhaft erwiesen, um sicherheitsrelevante Schallereignisse zu erkennen. Wenn keine Auswertung in Echtzeit möglich ist, dann kann beispielsweise auch ein geeigneter Audio-Puffer vorgesehen sein, der die erfasste Messgröße oder die abgeleitete Größe zwischenspeichert.

In der Klassifizierungseinheit ist vorzugsweise ein Klassifizierungsmodell implementiert, um das zumindest eine definierte sicherheitsrelevante Schallereignisses zu ermitteln. Das Klassifizierungsmodell kann beispielsweise dazu ausgebildet sein, aus dem Spektrogramm einen, für eine Wahrscheinlichkeit eines Vorliegens des zumindest einen definierten sicherheitsrelevanten Schallereignisses repräsentativen, Konfidenzwert zu ermitteln und es kann Schwellenwert vorgegeben sein oder vorgebbar werden. Die Steuerungseinheit kann dazu ausgebildet ist, die Seilbahn im Sicherheitsbetriebsmodus zu betreiben, wenn der Konfidenzwert den Schwellenwert überschreitet. Dadurch kann eine einfache Abfrage bereitgestellt werden. Der Schwellenwert kann ggf. auch variabel verändert werden.

Es kann vorteilhaft sein, wenn ein Analysemodell zur Analyse einer Detektions-Performance des Klassifizierungsmodells vorgesehen ist und der Schwellenwert anhand des Analysemodells, vorzugsweise über eine Benutzerschnittstelle, festlegbar ist. Als Analysemodell kann beispielsweise ein Genauigkeits-Trefferquote-Modell vorgesehen sein. Dadurch kann der Schwellenwert beispielsweise auf Basis von bereits vorhandenen Messdaten festgelegt werden und der Schwellenwert kann zudem einfach an das Risikopotential von verschiedenen Seilbahnen angepasst werden.

Vorzugsweise umfasst das Klassifizierungsmodell ein Künstliche-Intelligenz-Modell, vorzugsweise ein künstliches neuronales Netz. Das Künstliche-Intelligenz-Modell kann mit vorhandenen Daten trainiert werden und auch laufend verbessert werden. Beispielsweise kann das Künstliche-Intelligenz-Modell iterativ mittels des oben genannten Analysemodells analysiert und optimiert werden, wodurch die Detektions-Performance verbessert werden kann.

Das zumindest eine definierte sicherheitsrelevante Schallereignis umfasst vorzugsweise einen definierten charakteristischen Schrei einer Person, insbesondere einen Hilferuf, einen schmerzbedingten Schrei, einen aggressiven Schrei oder einen ängstlichen Schrei. Dadurch können die wichtigsten Gefährdungs-Szenarien abgedeckt werden. Das Trainieren des Künstliche-Intelligenz-Modells kann beispielsweise anhand von Messdaten erfolgen, die eine Vielzahl von definierten sicherheitsrelevanten Schallereignisse umfassen. Dabei kann dem Modell zunächst manuell vorgegeben werden, bei welchen Schallereignissen es sich um definierte sicherheitsrelevante Schallereignisse handelt, die es zu erkennen gilt und welche Schallereignisse irrelevant (weil nicht sicherheitsrelevant) sind. Das Modell lernt anhand dieser Vorgabe, die relevanten von den irrelevanten Schallereignissen zu unterscheiden.

Die Seilbahn umfasst in der Regel auch eine Antriebseinrichtung zum Antrieb der Seilbahnfahrzeuge. Die Steuerungseinheit ist dabei vorzugsweise dazu ausgebildet ist, die Antriebseinrichtung im Sicherheitsbetriebsmodus anzusteuern, um den Antrieb der Seilbahnfahrzeuge zu stoppen oder eine Fördergeschwindigkeit der Seilbahnfahrzeuge zu reduzieren. Dadurch kann die Seilbahn z.B. automatisch gestoppt werden, wenn ein als sicherheitsrelevant eingestufter charakteristischer menschlicher Schrei detektiert wird.

Alternativ oder zusätzlich kann in der Seilbahn auch eine Signaleinrichtung zur Erzeugung eines Alarmsignals, vorzugsweise eines akustischen Alarmsignals und/oder optischen Alarmsignals und/oder elektronischen Alarmsignals, vorgesehen sein und die Steuerungseinheit kann dazu ausgebildet sein, im Sicherheitsbetriebsmodus die Signaleinrichtung zur Erzeugung zumindest eines Alarmsignals anzusteuern. Dadurch können beispielsweise die Passagiere in der Seilbahnstation, in der das sicherheitsrelevante Schallereignis erkannt wurde, gewarnt bzw. informiert werden oder auch ein allfällig vorhandenes Bedienpersonal der Seilbahn. Auch die Passagiere oder das Bedienpersonal einer anderen Seilbahnstation könnten gewarnt bzw. informiert werden.

Vorteilhafte Ausführungsformen des erfindungsgemäßen Verfahrens sind in den Ansprüchen 10 bis 18 angegeben.

Die gegenständliche Erfindung wird nachfolgend unter Bezugnahme auf die Figuren 1-3 näher erläutert, die beispielhaft, schematisch und nicht einschränkend vorteilhafte Ausgestaltungen der Erfindung zeigen. Dabei zeigt
Fig. 1 eine Seilbahn in einer beispielhaften Ausführungsform der Erfindung,
Fig.2 eine bevorzugte Ausführungsform der Identifikation eines definierten sicherheitsrelevanten Schallereignisses anhand eines Blockdiagramms,
Fig.3 ein Genauigkeits-Trefferquote-Modell zur Ermittlung eines Schwellenwerts für die Identifikation des definierten sicherheitsrelevanten Schallereignisses.

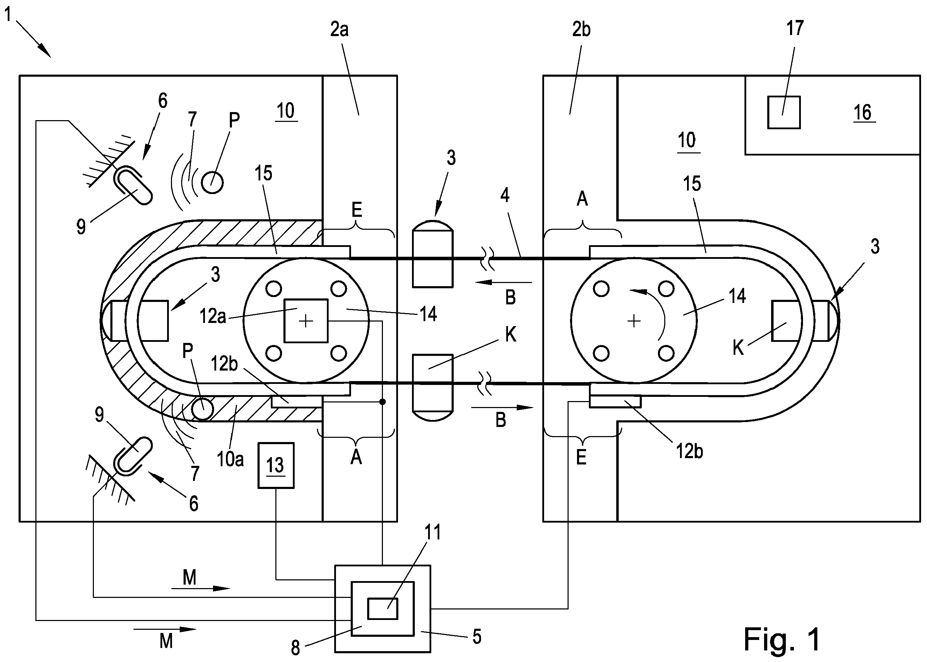

In Fig.1 ist eine Seilbahn 1 dargestellt, die als Umlaufbahn ausgebildet ist. Die Seilbahn 1 weist hier zwei Seilbahnstationen 2a, 2b auf und eine Mehrzahl von Seilbahnfahrzeugen 3, die mittels eines Förderseils 4 zwischen den Seilbahnstationen 2a, 2b bewegbar sind. Die Seilbahnstationen 2a, 2b sind als Endstationen ausgebildet, in welchen die Seilbahnfahrzeuge 3 gewendet werden. Die erste Seilbahnstation 2a könnte beispielsweise eine Talstation in einem Skigebiet sein und die zweite Seilbahnstation 2b könnte eine Bergstation sein. Die Seilbahn 1 ist hier lediglich beispielhaft als reine Kabinenbahn ausgeführt, wobei die Seilbahnfahrzeuge 3 als Kabinenfahrzeuge ausgeführt sind. Jedes Seilbahnfahrzeug 3 weist somit eine Kabine zur Aufnahme von Personen und/oder Objekten auf.

Die Seilbahn 1 ist als Einseil-Umlaufbahn ausgeführt, bei der das Förderseil 4 zugleich als Zugseil zum Antrieb der Seilbahnfahrzeuge 3 und als Tragseil zum Tragen der Seilbahnfahrzeuge 3 dient. Der Einfachheit halber ist das Förderseil 4 in der Mitte abgeschnitten dargestellt. Das Förderseil 4 ist in den Seilbahnstationen 2a, 2b jeweils um eine Seilscheibe 14 umgelenkt, um eine geschlossene Seilschleife auszubilden. Auf der freien Strecke zwischen den Seilbahnstationen 2a, 2b können die Seilbahnfahrzeuge 3 somit entlang der durch das Förderseil 4 gebildeten Seilschleife in zwei Bewegungsrichtungen B bewegt werden, wie durch die Pfeile angedeutet ist.

Die Seilbahnfahrzeuge 3 können in bekannter Weise jeweils in einem Einfahrtsbereich E der Seilbahnstationen 2a, 2b vom Förderseil 4 entkoppelt werden, danach abgebremst werden und mit verringerter Geschwindigkeit (relativ zur Geschwindigkeit des Förderseils 4) entlang eines Bahnsteigs 10 bis zum Ausfahrtsbereich A bewegt werden. Im Bereich des Bahnsteigs 10 können Passagiere P in die Seilbahnfahrzeuge ein- bzw. aussteigen. Im Ausfahrtsbereich A können die Seilbahnfahrzeuge 3 wieder auf die Geschwindigkeit des Förderseils 4 beschleunigt und mit dem Förderseil 4 gekoppelt werden. In den Seilbahnstationen 2a, 2b ist jeweils auch eine Führungsschiene 15 vorgesehen, entlang der die Seilbahnfahrzeuge 3 vom Einfahrtsbereich E zum Ausfahrtsbereich A bewegt werden können.

Zum lösbaren Koppeln mit dem Förderseil 4 weisen die Seilbahnfahrzeuge 3 jeweils eine geeignete (nicht dargestellte) Seilklemme auf. Eine Seilklemme weist in der Regel eine geeignete, vorzugsweise eine Anzahl von Federn umfassende, Vorspanneinrichtung auf, die die Seilklemme im geschlossenen Zustand vorspannt. In den Einfahrtsbereichen E und den Ausfahrtsbereichen A ist jeweils eine (nicht dargestellte) Betätigungseinrichtung zur Betätigung der Seilklemmen vorgesehen. An den Seilbahnfahrzeugen 3, vorzugsweise jeweils an der Seilklemme, sind vorzugsweise eine oder mehrere (nicht dargestellte) Führungsrollen angeordnet, mit welchen die Seilbahnfahrzeuge 3 entlang den Führungsschienen 15 abrollen können.

Um die vom Förderseil 4 entkoppelten Seilbahnfahrzeuge 3 innerhalb der Seilbahnstationen 2a, 2b entlang der jeweiligen Führungsschiene 15 bewegen zu können, ist üblicherweise ein (nicht dargestellter) Hilfsantrieb vorgesehen. Der Hilfsantrieb kann beispielsweise als Reifenförderer oder Kettenförderer ausgebildet sein. Ein Reifenförderer weist eine Mehrzahl von angetriebenen Reifen auf, die entlang der Führungsschiene 15 hintereinander angeordnet sind. Zum Antrieb eines Seilbahnfahrzeugs 3 können die Reifen mit einem am Seilbahnfahrzeug 3, vorzugsweise an der Seilklemme, vorgesehenen Reibbelag zusammenwirken.

Entgegen der Darstellung könnten zwischen den Seilbahnstationen 2a, 2b bekanntermaßen natürlich auch eine oder mehrere weitere Seilbahnstationen vorgesehen sein, die als Mittelstationen dienen, was insbesondere bei sehr langen Transportstrecken der Fall sein kann. Im Gegensatz zu den dargestellten Endstationen 2a, 2b erfolgt in den Mittelstationen kein Wenden der Seilbahnfahrzeuge 3, sondern die Seilbahnfahrzeuge 3 können in derselben Bewegungsrichtung weiterbewegt werden. In der Mittelstation sind somitje Fahrtrichtung ein Einfahrtsbereich E und ein Ausfahrtsbereich A vorgesehen.

Zwischen zwei Seilbahnstationen 2a, 2b sind in der Regel auch mehrere (nicht dargestellte) Seilbahnstützen zur Führung des Förderseils 4 vorgesehen. An den Seilbahnstützen ist jeweils eine Anzahl von Rollen, beispielsweise in Form einer sogenannten Rollenbatterie, vorgesehen, an welchen das Förderseil 4 geführt ist. Natürlich ist die dargestellte Ausführungsform aber nur beispielhaft und die Seilbahn 1 könnte auch als Umlaufbahn in Form einer Sesselbahn oder Kombi-Bahn ausgebildet sein oder als Pendelbahn. Der grundlegende Aufbau und die grundlegende Funktion einer Seilbahn 1 ist bekannt, weshalb an dieser Stelle keine nähere Beschreibung mehr erfolgt. Im Rahmen der Erfindung sind jedenfalls alle möglichen Ausführungsformen umfasst.

Die Seilbahn 1 weist auch eine Steuerungseinheit 5 zur Steuerung der Seilbahn 1 auf. Im Rahmen der Erfindung ist die Steuerungseinheit 5 zumindest zur Steuerung einer Fördergeschwindigkeit der Seilbahnfahrzeuge 3 ausgebildet. Natürlich kann die Steuerungseinheit 5 aber zusätzlich auch noch zur Steuerung von weiteren Funktionen der Seilbahn 1 vorgesehen sein, die für die Erfindung jedoch nicht relevant sind. Die Steuerungseinheit 5 ist in Fig. 1 lediglich schematisch dargestellt und kann in der Praxis z.B. an einer geeigneten Stelle in einer der Seilbahnstationen 2a, 2b vorgesehen sein. Die Steuerungseinheit 5 weist eine geeignete Hardware und/oder Software auf. Natürlich könnte die Steuerungseinheit 5 auch mehrere separate Steuerungseinheiten umfassen, die über geeignete Kommunikationsverbindung miteinander kommunizieren.

Weiters ist eine geeignete Antriebseinrichtung zum Antrieb der Seilbahnfahrzeuge 3 vorgesehen. Die Antriebseinrichtung kann eine oder mehrere erste Antriebseinheiten 12a zum Antrieb des Förderseils 4 umfassen und eine oder mehrere zweite Antriebseinheiten 12b zum Antrieb der Hilfsantriebe. Die Antriebseinheiten 12a, 12b können beispielsweise jeweils eine geeignete elektrische Maschine aufweisen. Im Beispiel gemäß Fig.1 ist die erste Antriebseinheit 12a in der ersten Seilbahnstation 2a angeordnet und ist dazu ausgebildet die Seilscheibe 14 anzutreiben. Zudem ist in beiden Seilbahnstationen 2a, 2b jeweils eine zweite Antriebseinheit 12b zum Antrieb des jeweiligen Hilfsantriebs vorgesehen.

Gemäß der Erfindung ist in zumindest einer der Seilbahnstationen 2a, 2b eine Erfassungseinrichtung 6 zur Erfassung einer Messgröße M eines Luftschalls 7 vorgesehen. Im gezeigten Beispiel ist die Erfassungseinrichtung 6 der Einfachheit halber nur in der ersten Seilbahnstation 2a angeordnet. Natürlich könnte aber auch in der zweiten Seilbahnstation 2b in analoger Weise eine Erfassungseinrichtung 6 vorgesehen sein. Zudem ist eine Klassifizierungseinheit 8 vorgesehen, die dazu ausgebildet ist, aus der Messgröße M oder einer daraus abgeleiteten Größe zumindest ein definiertes sicherheitsrelevantes Schallereignis zu identifizieren und die Steuerungseinheit 5 ist dazu ausgebildet ist, die Seilbahn 1 bei Identifizierung eines definierten sicherheitsrelevanten Schallereignisses in einem festgelegten Sicherheitsbetriebsmodus zu betreiben. Die Klassifizierungseinheit 8 kann beispielsweise in der Steuerungseinheit 5 integriert sein, z.B. in Form einer Software, könnte aber auch als separate Einheit ausgebildet sein, die über eine geeignete (drahtgebundenen oder drahtlosen) Kommunikationsverbindung einerseits mit der Erfassungseinrichtung 6 und andererseits mit der Steuerungseinheit 5 verbunden ist.

Im dargestellten Beispiel umfasst die Erfassungseinrichtung 6 beispielhaft zwei Mikrofone 9, die an unterschiedlichen Positionen innerhalb der ersten Seilbahnstation 2a angeordnet sind. Die Mikrofone 9 sind lediglich schematisch dargestellt und können z.B. an einer geeigneten ortsfesten Konstruktion in einem oberen Bereich der Seilbahnstation 2a angeordnet sein. Die Mikrofone 9 sind so angeordnet, dass die Messgröße M des Luftschalls 7 jeweils im Bereich des Bahnsteigs 10 erfasst werden kann. Die Messgröße M kann beispielsweise ein Schalldruck sein und/oder die aus der Messgröße M abgeleitete Größe kann ein Schalldruckpegel sein.

Im Rahmen der Erfindung umfasst das zumindest eine definierte sicherheitsrelevante Schallereignis vorzugsweise einen definierten charakteristischen Schrei einer Person P, insbesondere einen Hilferuf, einen schmerzbedingten Schrei, einen aggressiven Schrei oder einen ängstlichen Schrei. Die Aufzählung ist aber natürlich nicht abschließend und das definierte sicherheitsrelevante Schallereignis könnten noch weitere Schreie umfassen. In Fig. 1 ist beispielhaft eine Person P dargestellt, die vom Bahnsteig 10 in eine gestrichelt angedeutete Grube 10a gestürzt ist, in der sich die Seilbahnfahrzeuge 3 bewegen. Die Person P stößt einen Hilferuf in Form eines Luftschalls 7 aus, der das sicherheitsrelevante Schallereignis repräsentiert. Der Luftschall 7 kann vom Mikrofon 9 detektiert werden.

Das sicherheitsrelevante Schallereignis ist jedoch nicht auf menschliche Schreie beschränkt, sondern könnte beispielsweise auch andere Schallereignisse umfassen, die auf eine Gefährdung von Personen schließen lässt. Denkbar wäre z.B., dass das sicherheitsrelevante Schallereignis auch charakteristische Schallereignisse technischer Natur umfasst, die auf einen Defekt der Seilbahn schließen lassen, wie z.B. charakteristisches Quietschen, ein charakteristischer Knall oder dergleichen.

Im Sicherheitsbetriebsmodus kann die Steuerungseinheit 5 die Antriebseinrichtung, beispielsweise die erste Antriebseinheit 12a und die zweiten Antriebseinheiten 12b anzusteuern, um den Antrieb der Seilbahnfahrzeuge 3 gänzlich zu stoppen oder eine Fördergeschwindigkeit der Seilbahnfahrzeuge 3 zu reduzieren. Im konkreten Beispiel kann das bedeuten, dass die Klassifizierungseinheit 8 aus der Messgröße M des Luftschalls 7, der von der Person P in der Grube 15a erzeugt wird, ein sicherheitsrelevantes Schallereignis in Form eines Hilferufs identifiziert.

Die Steuerungseinheit 5 kann die Seilbahn 1 dann vom normalen Betriebsmodus in den Sicherheitsbetriebsmodus schalten und z.B. die erste Antriebseinheit 12a und die zweite Antriebseinheit 12b stoppen. Alternativ könnte aber auch lediglich die Fördergeschwindigkeit reduziert werden. Im Sicherheitsbetriebsmodus könnte aber auch für verschiedene definierte sicherheitsrelevante Schallereignisse z.B. auch unterschiedliche Aktionen vorgesehen sein. Beispielsweise könnte einem ersten sicherheitsrelevanten Schallereignis eine geringere Gefährdungsstufe zugeordnet sein, als einem vom ersten sicherheitsrelevanten Schallereignis verschiedenen zweiten sicherheitsrelevanten Schallereignis. Bei Erkennung des ersten sicherheitsrelevanten Schallereignisses könnte dann z.B. lediglich die Fördergeschwindigkeit der Seilbahnfahrzeuge 3 reduziert werden, während bei Detektion des zweiten sicherheitsrelevanten Schallereignisses der Antrieb komplett gestoppt wird.

Alternativ oder zusätzlich kann auch eine Signaleinrichtung 13 zur Erzeugung eines Alarmsignals vorgesehen sein. Das Alarmsignal umfasst dabei vorzugsweise ein akustisches Alarmsignal und/oder ein optisches Alarmsignal und/oder ein elektronisches Alarmsignal. Die Steuerungseinheit 5 kann im Sicherheitsbetriebsmodus die Signaleinrichtung 13 zur Erzeugung zumindest eines Alarmsignals ansteuern. In Fig.1 ist beispielhaft eine schematische Signaleinrichtung 13 in der ersten Seilbahnstation 2a angedeutet. Natürlich könnte aber auch in der zweiten Seilbahnstation 2b ebenfalls eine Signaleinrichtung 13 vorgesehen sein. Dadurch können auch die Passagiere in der zweiten Seilbahnstation 2b gewarnt oder informiert werden, wenn ein sicherheitsrelevanter Zwischenfall in der ersten Seilbahnstation 2a auftritt.

Die Alarmeinheit 13 könnte z.B. eine Warnleuchte umfassen, die im Sicherheitsbetriebsmodus aktiviert wird, um die in der jeweiligen Seilbahnstation 2a, 2b befindlichen Personen zu warnen. Alternativ oder zusätzlich könnte die Signaleinrichtung 13 auch einen Lautsprecher aufweisen, über den im Sicherheitsbetriebsmodus ein Warnton ausgegeben wird, um die in der jeweiligen Seilbahnstation 2a, 2b befindlichen Personen zu warnen. Die Signaleinrichtung 13 könnte aber beispielsweise auch dazu ausgebildet sein, ein elektronisches Alarmsignal in Form einer Alarmnachricht zu erzeugen und an eine Anzeigeeinrichtung zu senden. In diesem Fall könnte die Signaleinrichtung 13 z.B. auch Teil der Steuerungseinheit 5 sein. Die Signaleinrichtung 13 könnte beispielsweise eine stationäre Anzeigeeinrichtung, z.B. in Form eines Bildschirms umfassen, die in der ersten Seilbahnstation 2a angeordnet ist. Dadurch können die in der jeweiligen Seilbahnstation 2a, 2b befindlichen Passagiere gewarnt bzw. informiert werden.

In der Seilbahn 1 kann weiters auch ein Bedienraum 16 für das Bedienpersonal der Seilbahn 1 vorgesehen sein. In Fig.1 ist der Bedienraum 16 beispielhaft in der zweiten Seilbahnstation 2b vorgesehen. Natürlich könnte alternativ oder zusätzlich auch in der ersten Seilbahnstation 2a ein Bedienraum 16 vorgesehen sein. Die Signaleinrichtung 13 könnte in diesem Fall z.B. auch eine stationäre Anzeigeeinrichtung 17, z.B. wiederum in Form eines Bildschirms, umfassen, die im Bedienraum 16 angeordnet ist. Die stationäre Anzeigeeinrichtung 17 könnte z.B. ein Teil einer Benutzerschnittstelle sein, über die die Seilbahn 1 gesteuert werden kann. Wenn beispielsweise in der ersten Seilbahnstation 2a kein Bedienpersonal vorhanden ist, dann könnte das Bedienpersonal in der zweiten Seilbahnstation 2b mittels der Anzeigeeinrichtung 17 über den sicherheitsrelevanten Zwischenfall in der ersten Seilbahnstation 2a informiert werden bzw. gewarnt werden und bestimmte Handlungen setzen, z.B. erste Hilfe Maßnahmen einleiten.

Es kann auch vorteilhaft sein, wenn in der Seilbahnstation, in der die Erfassungseinrichtung 6 vorgesehen ist (hier der ersten Seilbahnstation 2a) eine (nicht dargestellte) Kamera zur Überwachung des Bahnsteigs 10 vorgesehen ist. Die von der Kamera aufgenommenen Bilder oder Videos können dann, vorzugsweise in Echtzeit, an eine Anzeigeeinrichtung, beispielsweise die Anzeigeeinrichtung 17 der zweiten Seilbahnstation 2b, übermittelt werden. Dadurch kann das Bedienpersonal in der zweiten Seilbahnstation 2b die aktuelle Situation in der ersten Seilbahnstation 2a analysieren und ggf. Handlungen setzen. Beispielsweise kann das Bedienpersonal die Seilbahn 1 manuell wieder vom Sicherheitsbetriebsmodus in den normalen Betriebsmodus schalten, wenn erkannt wurde, dass die Gefährdungssituation vorbei ist. Wenn im konkreten Beispiel z.B. über die Kamerabilder festgestellt wurde, dass sich die Person P, die in die Grube 15a gestürzt ist und durch den Hilferuf den Sicherheitsbetriebsmodus ausgelöst hat, wieder in einem sicheren Bereich, z.B. am Bahnsteig 15, befindet, dann kann der normale Betrieb fortgesetzt werden. Eine Aktivierung des normalen Betriebsmodus könnte von einem allfällig in der ersten Seilbahnstation 2a vorhandenen Bedienpersonal durchgeführt werden.

Zusätzlich oder alternativ zur dargestellten stationären Anzeigeeinrichtung 17 könnte die Signaleinrichtung 13 aber beispielsweise auch eine (nicht dargestellte) mobile Anzeigeeinrichtung umfassen. Die mobile Anzeigeeinrichtung könnte z.B. ein mobiles Endgerät, wie ein Smartphone, Tablet, usw. umfassen. Dadurch könnte auch ein ggf. außerhalb der Seilbahnstationen 2a, 2b befindliches Bedienpersonal über die Gefährdungssituation gewarnt bzw. informiert werden.

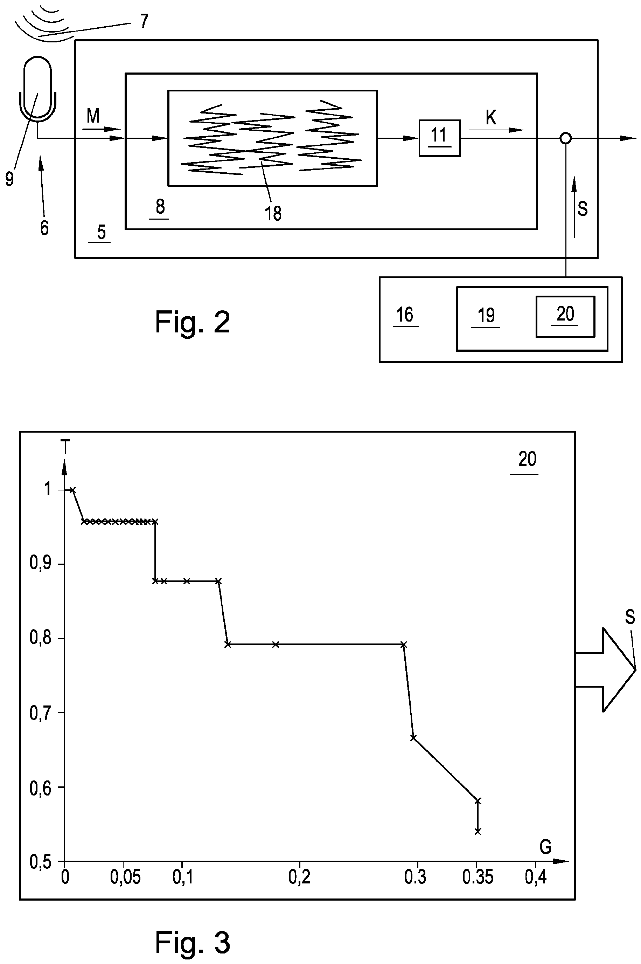

In Fig.2 ist eine bevorzugte Variante der Identifizierung des definierten sicherheitsrelevanten Schallereignisses anhand eines Blockdiagramms dargestellt. Die Erfassungseinrichtung 6, hier das Mikrofon 9, erzeugt eine Messgröße M des Luftschalls 7 und übermittelt die Messgröße M an die Klassifizierungseinheit 8. Die Klassifizierungseinheit 8 kann z.B. in der Steuerungseinheit 5 integriert sein. Die Klassifizierungseinheit 8 kann aus der erfassten Messgröße M des Luftschalls 7, z.B. dem Schalldruck, oder der daraus abgeleiteten Größe, z.B. dem Schalldruckpegel, ein Spektrogramm 18 erzeugen. Aus dem Spektrogramm 18 kann die Klassifizierungseinheit 8 das zumindest eine definierte sicherheitsrelevante Schallereignis ermitteln. Zur Ermittlung des zumindest einen definierten sicherheitsrelevanten Schallereignisses aus dem Spektrogramm 18 ist in der Klassifizierungseinheit 8 vorzugsweise ein Klassifizierungsmodell 11 implementiert, z.B. in Form einer geeigneten Software.

Das Klassifizierungsmodell 11 kann beispielsweise aus dem Spektrogramm 18 einen, für eine Wahrscheinlichkeit eines Vorliegens des zumindest einen definierten sicherheitsrelevanten Schallereignisses repräsentativen, Konfidenzwert K ermitteln. Der Konfidenzwert K kann somit beispielsweise zwischen 0 und 1 bzw. 0% und 100% betragen. Anhand des Konfidenzwerts K kann dann die Steuerungseinheit 5 entscheiden, ob ein definiertes sicherheitsrelevantes Schallereignis vorliegt oder nicht. Um dies zu entscheiden kann beispielsweise ein Schwellenwert S vorgegeben sein und die Steuerungseinheit 5 kann den vorgegebenen Schwellenwert S mit dem ermittelten Konfidenzwert K vergleichen. Der Schellenwert kann z.B. wiederum zwischen 0 und 1 bzw. 0% und 100% festgelegt sein. Wenn der ermittelte Konfidenzwert K den vorgegebenen Schwellenwert S überschreitet, bedeutet das, dass ein sicherheitsrelevantes Schallereignis vorliegt und die Steuerungseinheit 5 kann die Seilbahn 1 in den Sicherheitsbetriebsmodus schalten. Wenn der Konfidenzwert K den vorgegebenen Schwellenwert S unterschreitet, bedeutet das, dass kein sicherheitsrelevantes Schallereignis vorliegt und die Steuerungseinheit 5 kann die Seilbahn 1 weiterhin im Normalbetriebsmodus betreiben.

Der Schwellenwert S kann entweder fest vorgegeben sein oder der Schwellenwert S kann einstellbar sein, z.B. über eine mit der Steuerungseinheit 5 verbundene Benutzerschnittstelle 19. Die Benutzerschnittstelle 19 kann beispielsweise die oben genannte Benutzerschnittstelle des Bedienraums 16 sein, über welche die Seilbahn 1 vom Bedienpersonal gesteuert werden kann. Die Einstellung des Schwellenwerts S kann entweder gänzlich frei, z.B. manuell, erfolgen oder es könnte beispielsweise auch ein Analyse-Modell 20 vorgesehen sein, mit dem ein geeigneter Schwellenwert S ermittelt werden kann. Das Analyse-Modell 20 dient zur Analyse der Detektions-Performance des Klassifizierungsmodells 11 und kann z.B. ein Genauigkeits-Trefferquote-Modell umfassen.

Ein beispielhaftes Genauigkeits-Trefferquote-Modell ist in Fig.3 dargestellt. Auf der Ordinate ist die Trefferquote T zwischen 0,5 und 1 (bzw. 50% bis 100%) aufgetragen und auf der Abszisse ist die Genauigkeit G zwischen 0 und 0,4 (bzw. 0 und 40%) aufgetragen. In einem fiktiven Beispiel zur Analyse der Performance wird angenommen, dass in einer Aufzeichnung der Messgröße M insgesamt 24 tatsächliche sicherheitsrelevante Schallereignisse enthalten sind. Diese können z.B. durch einen Menschen als solche identifiziert wurden. Die Punkte im Diagramm entsprechen den 24 tatsächlichen sicherheitsrelevanten Schallereignissen. Wenn die Klassifizierungseinheit 8 beispielsweise insgesamt 67 sicherheitsrelevante Schallereignisse identifiziert und sich darunter 19 der 24 tatsächlich sicherheitsrelevanten Schallereignisse befinden, dann entspricht die Genauigkeit G einem Wert von G=19/67=28,4% und die Trefferquote T entspricht einem Wert von T=19/24=79,2%.

Die Trefferquote T gibt somit an, wie viele von den tatsächlichen sicherheitsrelevanten Schallereignissen identifiziert wurden und die Genauigkeit G gibt an, wie hoch die Wahrscheinlichkeit ist, dass es sich bei einem detektierten sicherheitsrelevanten Schallereignis um ein tatsächliches sicherheitsrelevantes Schallereignis handelt. Trefferquote T und Genauigkeit G sind daher gegenläufig und der Schwellenwert S kann als Kompromiss zwischen der Genauigkeit G und der Trefferquote T festgelegt werden. Je nachdem, ob in einer konkreten Anwendung die Genauigkeit G oder die Trefferquote T höher priorisiert wird, kann ein passender Schwellenwert S gewählt werden. Beispielsweise kann es vorteilhaft sein, wenn der Schwellenwert S so festgelegt ist, dass eine relativ hohe Trefferquote T von beispielsweise mindestens 75% erreicht wird. Im dargestellten Beispiel gemäß Fig.3 wird die geforderte Trefferquote T ≥ 75% beispielsweise mit einem Schwellenwert S=0,9 erreicht.

Da eine Nicht-Detektion eines (tatsächlichen) sicherheitsrelevanten Schallereignisse bei einer Seilbahn 1 schwerwiegende Konsequenzen haben kann, ist es vorteilhaft, wenn der Schwellenwert S so festgelegt wird, dass möglichst viele sicherheitsrelevante Schallereignisse detektiert werden. Dies kann zwar unter Umständen dazu führen, dass es im Betrieb gelegentlich zu unerwünschten Fehldetektionen und damit in Folge zu einem Umschalten in den Sicherheitsbetriebsmodus kommt (weil ein Schallereignis von der Klassifizierungseinheit 8 fälschlicherweise als sicherheitsrelevantes Schallereignis identifiziert wird), allerdings wird gleichzeitig die Gefahr verringert, dass ein (tatsächlich) sicherheitsrelevantes Schallereignis unerkannt bleibt. Das Risikopotential einer Seilbahn 1 kann aber z.B. im Einzelfall beurteilt werden und abhängig davon ein geeigneter Schwellenwert S gewählt werden.

Beispielsweise kann es bei einer Seilbahn 1, bei der Bedienpersonal anwesend ist, der Schwellenwert S so festgelegt werden, dass eine höhere Genauigkeit G bei einer geringeren Trefferquote T erreicht wird. Dadurch bleiben zwar unter Umständen tatsächlich sicherheitsrelevante Schallereignisse unerkannt, jedoch kann das anwesende Bedienpersonal in solchen Fällen manuell eingreifen. Der Vorteil ist somit, dass es zu weniger automatischen Aktivierungen des Sicherheitsbetriebsmodus kommt. Umgekehrt kann es bei einem vollständig autonomen Betrieb ohne Bedienpersonal gewünscht sein, dass möglichst kein tatsächlich sicherheitsrelevantes Schallereignis unerkannt bleibt, sodass allfällige Fehldetektionen in Kauf genommen werden. Hierbei kann der Schwellenwert S beispielsweise so festgelegt werden, dass eine geringere Genauigkeit G bei einer höheren Trefferquote T erreicht wird.

Das Klassifizierungsmodell umfasst vorzugsweise ein Künstliche-Intelligenz-Modell (Kl-Modell), vorzugsweise ein künstliches neuronales Netz. Solche KI-Modelle sind im Stand der Technik bekannt, weshalb an dieser Stelle keine nähere Beschreibung erfolgt. Der Fachmann kann ein geeignetes Modell auswählen. Das KI-Modell kann vor der Inbetriebnahme der Seilbahn 1 mit Trainingsdaten trainiert werden. Dazu kann beispielsweise eine Vielzahl von Schallereignissen erzeugt werden und dem KI-Modell vorgegeben werden, bei welchen Schallereignissen es sich um ein definiertes sicherheitsrelevantes Schallereignis handelt, dass es zu erkennen gilt, und welche Schallereignisse irrelevant sind. Das KI-Modell lernt dann selbstständig, die sicherheitsrelevanten Schallereignisse von den irrelevanten Schallereignissen zu unterscheiden. Es könnten aber beispielsweise auch Messdaten von bekannten Seilbahnen verwendet werden und die darin enthaltenen sicherheitsrelevanten Schallereignisse manuell identifiziert und dem Modell vorgegeben werden. Das Trainieren kann beispielsweise iterativ wiederholt werden, um die Detektions-Performance zu verbessern. Dabei kann beispielsweise in jedem Schritt eine Analyse der Detektions-Performance mittels des Analyse-Modells 20 durchgeführt werden.

## Patentansprüche

1. Seilbahn (1) mit einer Anzahl von Seilbahnstationen (2a, 2b) und mit einer Anzahl von Seilbahnfahrzeugen (3), die mittels eines Förderseils (4) zwischen der Anzahl von Seilbahnstationen (2a, 2b) bewegbar sind, wobei eine Steuerungseinheit (5) zur Steuerung der Seilbahn (1) vorgesehen ist, **dadurch gekennzeichnet, dass** in zumindest einer Seilbahnstation (2a) eine Erfassungseinrichtung (6) zur Erfassung einer Messgröße (M) eines Luftschalls (7) vorgesehen ist, dass eine Klassifizierungseinheit (8) vorgesehen ist, die dazu ausgebildet ist, aus der Messgröße (M), vorzugsweise einem Schalldruck, oder einer daraus abgeleiteten Größe, vorzugsweise einem Schalldruckpegel, zumindest ein definiertes sicherheitsrelevantes Schallereignis zu identifizieren und dass die Steuerungseinheit (5) dazu ausgebildet ist, die Seilbahn (1) bei Identifizierung eines definierten sicherheitsrelevanten Schallereignisses in einem festgelegten Sicherheitsbetriebsmodus zu betreiben.

2. Seilbahn (1) nach Anspruch 1, **dadurch gekennzeichnet, dass** die Erfassungseinrichtung (6) zumindest ein Mikrofon (9) umfasst **und/oder** dass die Erfassungseinrichtung (6) derart in der zumindest einen Seilbahnstation (2a) angeordnet ist, dass die Messgröße (M) im Bereich eines Bahnsteigs (10) der zumindest einen Seilbahnstation (2a) erfassbar ist.

3. Seilbahn (1) nach Anspruch 1 oder 2, **dadurch gekennzeichnet, dass** die Klassifizierungseinheit (8) dazu ausgebildet ist, aus der erfassten Messgröße (M) oder der daraus abgeleiteten Größe ein Spektrogramm (18) zu erzeugen und das zumindest eine definierte sicherheitsrelevante Schallereignis aus dem Spektrogramm (18) zu ermitteln.

4. Seilbahn (1) nach einem der Ansprüche 1 bis 3, **dadurch gekennzeichnet, dass** in der Klassifizierungseinheit (8) ein Klassifizierungsmodell (11) zur Ermittlung des zumindest einen definierten sicherheitsrelevanten Schallereignisses implementiert ist, wobei das Klassifizierungsmodell (11) vorzugsweise dazu ausgebildet ist, das definierte sicherheitsrelevante Schallereignis aus dem Spektrogramm (18) zu ermitteln.

5. Seilbahn (1) nach Anspruch 4, **dadurch gekennzeichnet, dass** das Klassifizierungsmodell (11) dazu ausgebildet ist, vorzugsweise aus dem Spektrogramm (18), einen, für eine Wahrscheinlichkeit eines Vorliegens des zumindest einen definierten sicherheitsrelevanten Schallereignisses repräsentativen, Konfidenzwert (K) zu ermitteln, dass ein Schwellenwert (S) vorgegeben oder vorgebbar ist und dass die Steuerungseinheit (5) dazu ausgebildet ist, die Seilbahn (1) im Sicherheitsbetriebsmodus zu betreiben, wenn der Konfidenzwert (K) den Schwellenwert (S) überschreitet.

6. Seilbahn (1) nach Anspruch 5, **dadurch gekennzeichnet, dass** ein Analysemodell (20) zur Analyse einer Detektions-Performance des Klassifizierungsmodells (11) vorgesehen ist und dass der Schwellenwert (S) anhand des Analysemodells (20), vorzugsweise über eine Benutzerschnittstelle (19), festlegbar ist, wobei als Analysemodells (20) vorzugsweise ein Genauigkeits-Trefferquote-Modell vorgesehen ist.

7. Seilbahn (1) nach einem der Ansprüche 4 bis 6, **dadurch gekennzeichnet, dass** das Klassifizierungsmodell (11) ein Künstliche-Intelligenz Modell umfasst, vorzugsweise ein künstliches neuronales Netz.

8. Seilbahn (1) nach einem der Ansprüche 1 bis 7, **dadurch gekennzeichnet, dass** das zumindest eine definierte sicherheitsrelevante Schallereignis einen definierten charakteristischen Schrei einer Person (P) umfasst, insbesondere einen Hilferuf, einen schmerzbedingten Schrei, einen aggressiven Schrei oder einen ängstlichen Schrei.

9. Seilbahn (1) nach einem der Ansprüche 1 bis 8, **dadurch gekennzeichnet, dass** die Seilbahn (1) eine Antriebseinrichtung (12a, 12b) zum Antrieb der Seilbahnfahrzeuge (3) umfasst und dass die Steuerungseinheit (5) dazu ausgebildet ist, die Antriebseinrichtung (12a, 12b) im Sicherheitsbetriebsmodus anzusteuern, um den Antrieb der Seilbahnfahrzeuge (3) zu stoppen oder eine Fördergeschwindigkeit der Seilbahnfahrzeuge (3) zu reduzieren **und/oder** dass in der Seilbahn (1) eine Signaleinrichtung (13) zur Erzeugung eines Alarmsignals, vorzugsweise eines akustischen Alarmsignals und/oder optischen Alarmsignals und/oder elektronischen Alarmsignals, vorgesehen ist und dass die Steuerungseinheit (5) dazu ausgebildet ist, im Sicherheitsbetriebsmodus die Signaleinrichtung (13) zur Erzeugung zumindest eines Alarmsignals anzusteuern.

10. Verfahren zum Betreiben einer Seilbahn (1) mit einer Anzahl von Seilbahnstationen (2a, 2b) und mit einer Anzahl von Seilbahnfahrzeugen (3), die mittels eines Förderseils (4) zwischen der Anzahl von Seilbahnstationen (2a, 2b) bewegt werden, wobei die Seilbahn (1) mittels einer Steuerungseinheit (5) gesteuert wird, **dadurch gekennzeichnet, dass** in zumindest einer Seilbahnstation (2a) eine Messgröße (M) eines Luftschalls (7) erfasst wird, dass mittels einer Klassifizierungseinheit (8) aus der Messgröße (M), vorzugweise einem Schalldruck, oder einer daraus abgeleiteten Größe, vorzugsweise einem Schalldruckpegel, zumindest ein definiertes sicherheitsrelevantes Schallereignis identifiziert wird und dass die Steuerungseinheit die Seilbahn (1) bei Identifizierung des zumindest einen definierten sicherheitsrelevanten Schallereignisses in einem festgelegten Sicherheitsbetriebsmodus betreibt.

11. Verfahren nach Anspruch 10, **dadurch gekennzeichnet, dass** die Messgröße (M) mittels eines Mikrofons (9) erfasst wird und/oder dass die Messgröße (M) im Bereich eines Bahnsteigs (10) der zumindest einen Seilbahnstation (2a) erfasst wird.

12. Verfahren nach Anspruch 10 oder 11, **dadurch gekennzeichnet, dass** mit der Klassifizierungseinheit (8) ein Spektrogramm (18) der erfassten Messgröße (M) erzeugt wird und dass das zumindest eine definierte sicherheitsrelevante Schallereignis aus dem Spektrogramm (18) ermittelt wird.

13. Verfahren nach einem der Ansprüche 10 bis 12, **dadurch gekennzeichnet, dass** das zumindest eine definierte sicherheitsrelevante Schallereignis mittels eines in der Klassifizierungseinheit (8) implementierten Klassifizierungsmodells (11), vorzugsweise aus dem Spektrogramm (18), ermittelt wird.

14. Verfahren nach Anspruch 13, **dadurch gekennzeichnet, dass** mittels des Klassifizierungsmodells (11), vorzugsweise aus dem Spektrogramm (18), ein, für eine Wahrscheinlichkeit eines Vorliegens des zumindest einen definierten sicherheitsrelevanten Schallereignisses repräsentativer, Konfidenzwert (K) ermittelt wird, dass ein Schwellenwert (S) vorgegeben wird und dass die Steuerungseinheit (5) die Seilbahn (1) im Sicherheitsbetriebsmodus betreibt, wenn der Konfidenzwert (K) den Schwellenwert (S) überschreitet.

15. Verfahren nach Anspruch 14, **dadurch gekennzeichnet, dass** der Schwellenwert (S) anhand eines Genauigkeits-Trefferquote-Modells festgelegt wird, vorzugsweise über eine Benutzerschnittstelle (19).

16. Verfahren nach einem der Ansprüche 13 bis 15, **dadurch gekennzeichnet, dass** als Klassifizierungsmodell (11) ein Künstliche-Intelligenz Modell verwendet wird, vorzugsweise ein künstliches neuronales Netz.

17. Verfahren nach einem der Ansprüche 10 bis 16, **dadurch gekennzeichnet, dass** das zumindest eine definierte sicherheitsrelevante Schallereignis einen definierten charakteristischen Schrei einer Person (P) umfasst, insbesondere einen Hilferuf, einen schmerzbedingten Schrei, einen aggressiven Schrei oder einen ängstlichen Schrei.

18. Verfahren nach einem der Ansprüche 10 bis 17, **dadurch gekennzeichnet, dass** im Sicherheitsbetriebsmodus ein Antrieb der Seilbahnfahrzeuge (3) gestoppt wird oder eine Fördergeschwindigkeit der Seilbahnfahrzeuge (3) reduziert wird **und/oder** dass im Sicherheitsbetriebsmodus mittels einer Signaleinrichtung (13) zumindest ein Alarmsignal erzeugt wird, vorzugsweise ein akustisches Alarmsignal und/oder ein optisches Alarmsignal und/oder ein elektronisches Alarmsignal.
